# EUROPEAN PATENT SPECIFICATION

(11) **EP 0 885 167 B1**
(45) Date of publication and mention of the grant of the patent: **03.11.1999**
(21) Application number: 97907515.7
(22) Date of filing: 06.03.1997
(51) Int. Cl.: C01B 15/029

(54) **METHOD FOR THE PRODUCTION OF HYDROGEN PEROXIDE BY DIRECT SYNTHESIS OF HYDROGEN AND OXYGEN IN CONTACT WITH A CATALYST IN A SOLVENT**
VERFAHREN ZUR HERSTELLUNG VON WASSERSTOFFPEROXID DURCH DIREKTE SYNTHESE VON WASSERSTOFF UND SAUERSTOFF IN KONTAKT MIT EINEM KATALYSATOR IN EINEM LÖSUNGSMITTEL
PROCEDE DE PRODUCTION DE PEROXYDE D'HYDROGENE PAR SYNTHESE DIRECTE D'HYDROGENE ET D'OXYGENE AU CONTACT D'UN CATALYSEUR DANS UN SOLVANT

(30) Priority: 07.03.1996 SE 9600884
(43) Date of publication of application: 23.12.1998
(73) Proprietor: Erik Bengtsson Process Design, 445 34 Bohus (SE)
(72) Inventor: BENGTSSON, Erik, S-445 34 Bohus (SE)
(74) Representative: Kristiansen, Alf P.
(86) International application number: SE9700380
(87) International publication number: WO9732811

(56) References cited:
- EP-A- 0 049 806
- US-A- 4 772 458
- US-A- 5 338 531

## Description

The present invention relates to a method for the production of hydrogen peroxide by direct synthesis of hydrogen and oxygen in contact with a catalyst and in a solvent. After separation of the solvent from the formed product, peroxide solutions in water having high concentrations are obtained. These hydrogen peroxide solutions are used for different chemical processes, especially for bleaching of cellulose.

### PRIOR ART:

Different methods for the production of hydrogen peroxide are already known. A method which has been used for a long time comprises use of a complex anthraquinone solution which is initially hydrated and thereafter oxidised with air for the production of hydrogen peroxide, which thereafter is extracted in a water phase. However, this method is costly and in recent time it has become usual to produce hydrogen peroxide by direct reaction between hydrogen and oxygen in the presence of, for example, a palladium catalyst and water. Small additions of sulphuric acid and phosphoric acid and halogen ions promote the formation of hydrogen peroxide.

Various catalysts have been made for the direct synthesis of hydrogen peroxide by reaction of hydrogen and oxygen. They are usually based on the use of a noble metal. Palladium and platina or mixtures thereof are especially useful. Such catalysts are described, for example, in the US patents 4 681 751, 4 772 458, 5 082 458 and 5 338 531.

Direct synthesis of hydrogen peroxide through reaction between the starting materials may also be carried out in water or in water together with different other solvents. These solvents may be organic and have sometimes a limited solubility in water.

During recent times it has also been proposed to produce hydrogen peroxide by direct synthesis of hydrogen and oxygen in the presence of carbon dioxide under supercritical conditions. The carbon dioxide is then in a liquid-like phase and the carbon dioxide is therefore an inorganic solvent.

It is also known to perform the reaction in organic solvents, for example methanol. Such a method is described in the European patent application 0 049 806. A mixture of acetone and water in a ratio of 75 to 25 is also known through the US patent 3 361 533. These solvents have high or unlimited solubility in water and peroxide, which requires a costly refining after the reaction.

It has also been proposed to simultaneously have a water solution and a solvent having a low solubility of water and hydrogen peroxide in the reactor. This is described in, for example, the US patent 1 516 418 and the European patent application no. 0 623 552. The solvent is in these cases always saturated with water and hydrogen peroxide and the formation of the hydrophilic hydrogen peroxide therefore occurs substantially in a water phase on the surface of the catalyst.

### TECHNICAL PROBLEM:

A substantial disadvantage of the production method of hydrogen peroxide by oxidation of anthraquinone is that this method is complicated and requires large investment costs. This is one of the reasons that production of hydrogen peroxide by direct synthesis in water-based reaction media has been tried. However, with such a method the reaction velocity is comparatively low and the hydrogen peroxide is obtained in relatively low concentrations. The reason for this is that both reactants, hydrogen and oxygen, have low solubility in water. A second disadvantage is that contaminating additions of acid and halogenides cannot be avoided if hydrogen peroxide in at least moderately high yield is to be obtained. In spite of these additions, it is scarcely possible to produce more concentrated hydrogen peroxide than 15-20 weight percent. In addition, the side reaction of water forming instead of hydrogen peroxide forming will be very great. A costly purifying and concentrating after the reactor will therefore be inevitable.

Due to the fact that water is a less convenient solvent for direct synthesis of hydrogen peroxide, the mass transport will be slow and this makes it necessary to use a large reactor with high pressure. Only 10-20 kg of peroxide per hour can be produced per cubic metre reactor at 100 bar. The reaction mixture is also corrosive, which leads to increased costs of the process equipment and the mixture can be so aggressive that it can even dissolve the catalyst metal.

It has therefore long been a desire to be able to produce hydrogen peroxide by direct synthesis of hydrogen and oxygen in a simple and cheap way which gives hydrogen peroxide in high concentrations and which does not include large plants which take up a large amount of space and resulting high investment costs.

### SOLUTION:

According to the invention, a method has therefore been brought about which is not burdened with the abovementioned disadvantages, which method which relates to the production of hydrogen peroxide by direct synthesis of hydrogen and oxygen in contact with a catalyst, is characterized in that the reaction is carried out in an organic solvent without a water phase and with a solubility of water and/or hydrogen peroxide of up to 50 gram per litre and that the reaction should not be driven so far that the solvent is saturated with water or hydrogen peroxide.

According to the invention, the solvent can consist of a hydroquinone solvent.

Suitable hydroquinone solvents according to the invention may be nonanol, octanol, trioctylphosphate, tetrabutylurea or octylcaprolactam or mixtures of these substances, possibly in combination with aromatic solvents.

The method according to the invention is suitably carried out by means of a catalyst of a noble metal, preferably palladium, platina or mixtures thereof on a carrier of, for example, carbon, fluorinated carbon, silicic acid, aluminium oxide or polymer materials.

According to the invention, it is suitable that the solvent contains an acid such as sulphuric acid or phosphoric and/or halogenides, preferably in the form of HCl, HBr or HJ.

The method according to the invention can suitably be carried out by feeding oxygen and hydrogen continuously to a reactor under pressure, suitably up to 100 bar, containing solvents and a suspended catalyst, from where solvents and reaction products are continuously removed, freed of waste gases and subjected to a separation step, preferably a vacuum drying step, where the hydrogen peroxide and water are evaporated for later condensation and from where separated solvents may be returned to the reactor.

According to the invention, the separation step can also be carried out by washing out the hydrogen peroxide with water from the solvent.

### DESCRIPTION OF THE FIGURES:

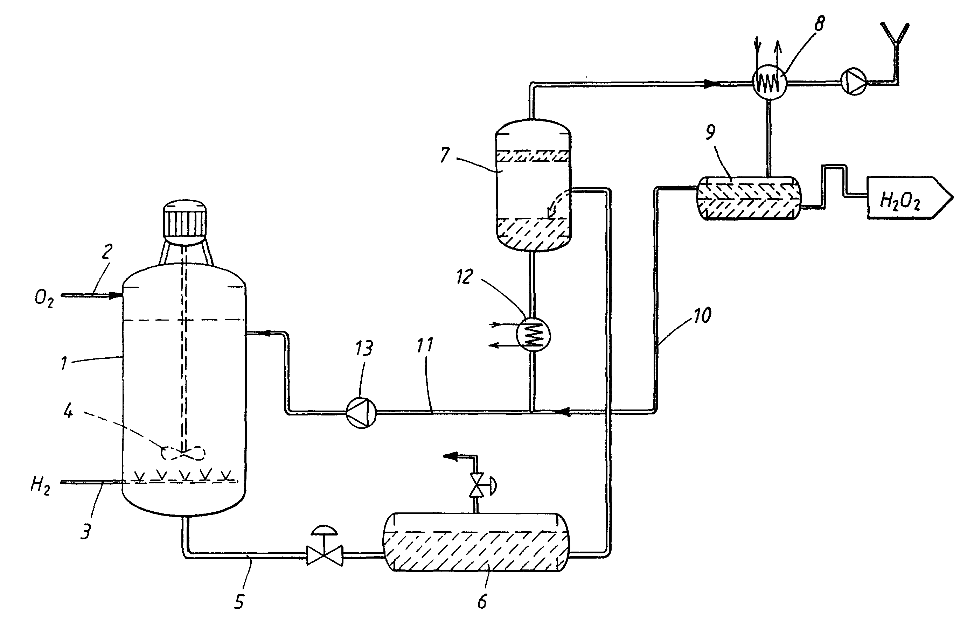

The invention will now be described more in detail with reference to the attached drawing, which shows a flow sheet of a preferable embodiment of the invention.

### DETAILED DESCRIPTION:

The figure shows a continuous, preferred embodiment of the method according to the invention. In a reactor 1, which works with a preferable pressure of 50 bar and a temperature of 10-40°C, oxygen gas is introduced in the upper part of the reactor through a conduit 2 and hydrogen gas into the lower part through a conduit 3. To avoid the need for a high pressure pump for the supply of oxygen (the oxygen shall be pumped in against a pressure of, for example, 50 bar) the oxygen can be supplied in the form of liquid which immediately vaporises in the reactor 1. In the reactor 1 a stirrer 4 is arranged for stirring and intimate mixing of the oxygen and the hydrogen with each other and with the solvent according to the invention and suspended catalyst. The pressure in the reactor is determined from economic reasons. A too high pressure requires large investments in the form of thick wall reactors and expensive pressure pumps for feeding the reactants and solvent into the reactor. The temperature is determined by a compromise between high reaction velocity, which requires a high temperature, and a small decomposition of hydrogen peroxide to water at the catalyst, which requires a low temperature. In principal the temperature can be regulated from the freezing point of the mixture up to 100°C.

A liquid mixture of formed products, starting products and solvents together with catalyst is continuously taken out from the reactor at the bottom via a conduit 5. This mixture can be degassed in a degasser 6 after reducing the pressure through a pressure reduction valve. This degassing is not necessary per se in a separate step and the degassing may occur later in the system but it is suitable to carry it out in a special degasser 6 since it then will be easier to collect the gases hydrogen and oxygen for reuse.

From the waste gases 6 the liquid mixture is conducted suitably to a vacuum drier 7 where vacuum of suitably 40 millibar prevails. Peroxide and water which have formed and any remaining gases are evaporated in the vacuum drier and conducted to a cooler 8 where hydrogen peroxide, water and an amount of solvent which has been carried over are condensed and may flow down into a separation tank 9 at a lower level, approximately 10 metres lower, where water and hydrogen peroxide will form a lower layer and the solvent an upper layer since water and hydrogen peroxide have limited solubility in the solvent. From this separation tank completed hydrogen peroxide in a water solution is taken out and the solvent is returned through conduit 10 and united with solvent from the vacuum drier in the conduit 11. Cooling of the solvent in the conduit 11 may occur through a heat exchanger if this is necessary. Thereafter, a high pressure pump 13 feeds the solvent mixture into the reactor 1.

As stated above, the method according to this flow sheet is continuous and can easily be regulated by usual process controls of a known kind. The catalyst which exists in a finely divided form circulates together with the solvent in the plant. On some occasions, however, it can be necessary to arrange a filter for the catalyst, which then is returned in another way to the reactor. According to the flow sheet, no catalyst is consumed and the concentration thereof will the whole time remain constant in the solvent.

Even though according to the flow sheet a vacuum drier 7 is arranged it will be evident that the hydrogen peroxide can be separated and collected from the solvent in another way.

According to the present invention, the reaction occurs in a solvent without any water phase by not carrying out the reaction so far that the solvent is saturated with water or hydrogen peroxide. The problem of the mass transport in water and the low reaction time is thereby solved. The reaction which occurs in an organic phase will accordingly be quick since the solubility of the reactants is higher in organic solvents than in water.

By making the method continuous and allowing the water phase to be formed only after the reactor it will therefore be possible to wash out formed peroxide with water from the solvent in a simple way or, as shown above, elute the hydrogen peroxide by vacuum drying. In the latter case, the hydrogen peroxide is obtained in a very pure form without oxygen and halogenide ions since these components have a very low vapour pressure.

The solvents according to the invention are suitably those which have been mentioned above. Aromatic solvents which can be admixed to a hydroquinone solvent include Shellsol AB or Solvesso from Esso. It is important that the solvent has an optimal solubility of water and peroxide, which means up to about 50 grams per litre without any water phase precipitating out. These solvents are at the same time mixable to a very limited extent with hydrogen peroxide solutions, which means that the extracted or obtained hydrogen peroxide solution from the vacuum drying will be pure and almost free from dissolved solvent. They have also been well tested in mixtures with hydrogen peroxide and it has been shown that they do not react or form explosive mixtures at the conditions which prevail in the present process. Other solvents than those mentioned above are, however, also conceivable.

The catalyst which is used according to the present invention and is suitably a noble metal, preferably palladium, platina or mixtures thereof is typically carried by a carrier such as carbon, fluorinated carbon, silicic acid, aluminium oxide or polymer materials. Other catalysts and carriers for them may also be used. The catalyst should be so finely dispersed in the solvent that above all a large reaction surface is obtained, but also so that it does not clog the vents and pipes, which would necessitate a filtering the catalyst from the reaction mixture and the solvent.

To improve the yield and the reaction velocity, the solvent should contain an acid such as sulphuric acid or phosphoric acid and/or halogenides, preferably in the form of HCl, HBr or HJ. By means of the present invention, when the reaction products are separated from the solvent through vacuum drying these compounds will mainly remain in the solvent and will not contaminate the hydrogen peroxide.

Through the reaction in the reactor 1 equal amounts of water and peroxide are usually formed. Since no water is present elsewhere in the system, the end product will then consist of a 50% hydrogen peroxide solution in water. This is the concentration which usually is sold and therefore no concentration of the finished product has to be made, especially with regard to the fact that the acid compounds mainly remain in the solvent.

The yield of reaction products formed depends on the collection of the eluted hydrogen and oxygen gases but can be in the order of 95%. Depending on the reaction conditions, even stronger solutions than 50% hydrogen peroxide may be obtained since the reaction for forming hydrogen peroxide can be obtained due to the fact that the content of hydrogen peroxide in the reaction solution is low.

The invention is not limited to the above described embodiment but can be varied in different ways within the scope of the claims.

## Claims

1. Method for the production of hydrogen peroxide by direct synthesis of hydrogen and oxygen in contact with a catalyst, **characterized in** that the reaction is carried out in an organic solvent without water phase and with a solubility of water and/or hydrogen peroxide of up to 50 gram per litre and that the reaction is not driven so far that the solvent is saturated with water or hydrogen peroxide.

2. Method according to claim 1,
**characterized in** that the solvent consists of a hydroquinone solvent.

3. Method according to claim 2,
**characterized in** that the hydroquinone solvent consists of nonanol, octanol, trioctylphosphate, tetrabutylurea or octylcaprolactam or mixtures of these solvents possibly in combination with aromatic solvents.

4. Method according to any of claims 1-3,
**characterized in** that the catalyst consists of a noble metal, preferably palladium, platina or mixtures thereof on a carrier of, for example, carbon, fluorinated carbon, silicic acid, aluminium oxide or polymer materials.

5. Method according to any of claims 1-4,
**characterized in** that the solvent contains an acid such as sulphuric acid or phosphoric acid and/or halogenides preferably in the form of HCl, HBr or HJ.

6. Method according to any of claims 1-5,
**characterized in** that oxygen and hydrogen gas are continuously fed into a reactor under pressure, suitably up to 100 bar, containing solvents and a suspended catalyst, wherefrom solvents and reaction products are continuously taken out, freed of waste gases and subjected to a separation step, preferably a vacuum drying step, where hydrogen peroxide and water are evaporated for later condensation and from where separated solvents are returned to the reactor.

7. Method according to claim 6,
**characterized in** that the separation step occurs by washing the hydrogen peroxide with water from the solvent.

## Patentansprüche

1. Verfahren zur Herstellung von Wasserstoffperoxid durch direkte Synthese von Wasserstoff und Sauerstoff in Kontakt mit einem Katalysator,
dadurch gekennzeichnet, daß
die Reaktion in einem organischem Lösungsmittel ohne Wasserphase durchgeführt wird mit einer Löslichkeit von Wasser und/oder Wasserstoffperoxid von bis zu 50 g/Liter und, daß die Reaktion nicht so weit geführt wird, daß das Lösungsmittel mit Wasser oder Wasserstoffperoxid gesättigt ist.

2. Verfahren nach Anspruch 1,
dadurch gekennzeichnet, daß
das Lösungsmittel aus einem Hydrochinon-Lösungsmittel besteht.

3. Verfahren nach Anspruch 2,
dadurch gekennzeichnet, daß
das Hydrochinon-Lösungsmittel aus Nonanol, Octanol, Trioctylphosphat, Tetrabutylharnstoffoder Octylcaprolactam besteht oder aus Gemischen dieser Lösungsmittel, gegebenenfalls in Verbindung mit aromatischen Lösungsmitteln.

4. Verfahren nach einem der Ansprüche 1 - 3,
dadurch gekennzeichnet, daß
der Katalysator aus einem Edelmetall besteht, vorzugsweise Palladium, Platin oder Gemischen hiervon auf einem Träger aus beispielsweise Kohlenstoff, fluoriertem Kohlenstoff, Kieselsäure, Aluminiumoxid oder Polymermaterialien.

5. Verfahren nach einem der Ansprüche 1 - 4,
dadurch gekennzeichnet, daß
das Lösungsmittel eine Säure enthält, wie beispielsweise Schwefelsäure oder Phosphorsäure und/oder Halogenide, vorzugsweise in Form von HCI, HBr oder HJ.

6. Verfahren nach einem der Ansprüche 1 - 5,
dadurch gekennzeichnet, daß
Sauerstoffund Wasserstoffgas kontinuierlich in einen unter Druck stehenden, geeigneterweise bis zu 100 bar, Reaktor eingeführt werden, der Lösungsmittel und einen suspendierten Katalysator enthält, woraus Lösungsmittel und Reaktionsprodukte kontinuierlich entnommen werden, von Abgasen befreit und einem Trennungsschritt unterzogen werden, vorzugsweise einem Vakuumtrocknungsschritt, wobei Wasserstoffperoxid und Wasser zur späteren Kondensation verdampft werden, und von wo abgetrennte Lösungsmittel wieder in den Reaktor überführt werden.

7. Verfahren nach Anspruch 6,
dadurch gekennzeichnet, daß
der Trennungsschritt durch Waschen des Wasserstoffperoxids mit Wasser aus dem Lösungsmittel erfolgt.

## Revendications

1. Procédé de production de peroxyde d'hydrogène par réaction directe d'hydrogène et d'oxygène en contact avec un catalyseur, caractérisé en ce que la réaction est conduite dans un solvant organique sans phase aqueuse et avec une solubilité de l'eau et/ou du peroxyde d'hydrogène de jusqu'à 50 g/l, et en ce que la réaction n'est pas prolongée jusqu'à ce que le solvant soit saturé d'eau ou de peroxyde d'hydrogène.

2. Procédé selon la revendication 1, caractérisé en ce que le solvant consiste en un solvant d'hydroquinone.

3. Procédé selon la revendication 2, caractérisé en ce que le solvant d'hydroquinone consiste en nonanol, octanol, phosphate de trioctyle, tétrabutylurée ou octylcaprolactame ou en mélanges de ces solvants, éventuellement en combinaison avec des solvants aromatiques.

4. Procédé selon l'une quelconque des revendications 1 à 3, caractérisé en ce que le catalyseur consiste en un métal noble, de préférence le palladium, le platine ou des mélanges de ceux-ci sur un support de carbone, de carbone fluoré, d'acide silicique, d'oxyde d'aluminium ou de matériaux polymères, par exemple.

5. Procédé selon l'une quelconque des revendications 1 à 4, caractérisé en ce que le solvant contient un acide comme l'acide sulfurique ou l'acide phosphorique et/ou des halogénures, de préférence sous forme de HCl, HBr ou HI.

6. Procédé selon l'une quelconque des revendications 1 à 5, caractérisé en ce que l'oxygène et l'hydrogène sont introduits en continu dans un réacteur sous pression, de manière appropriée jusqu'à 100 bar, contenant des solvants et un catalyseur en suspension, d'où les solvants et les produits réactionnels sont retirés en continu, débarrassés des gaz usés et soumis à une étape de séparation, de préférence une étage de séchage sous vide, où le peroxyde d'hydrogène et l'eau sont évaporés pour une condensation ultérieure et d'où les solvants séparés sont renvoyés au réacteur.

7. Procédé selon la revendication 6, caractérisé en ce que l'étape de séparation a lieu par séparation du peroxyde d'hydrogène et de l'eau d'avec le solvant par lavage.
